# EUROPEAN PATENT SPECIFICATION

(11) **EP 4 455 492 B1**
(45) Date of publication and mention of the grant of the patent: **29.07.2026**
(21) Application number: 24172819.5
(22) Date of filing: 26.04.2024
(51) Int. Cl.: F16B 2/08, F16B 5/06, H02G 3/32

(54) **CABLE TIE CRADLE MOUNT FIXINGS**
BEFESTIGUNGEN FÜR KABELBINDERHALTERUNG
FIXATION DE SUPPORTS DE BERCEAU DE SERRE-CÂBLE

(30) Priority: 28.04.2023 US 202363499109 P; 20.10.2023 US 202363591911 P
(43) Date of publication of application: 30.10.2024
(73) Proprietor: HellermannTyton Corporation, Milwaukee, WI 53224 (US)
(72) Inventor: Klos, Scott G., 53024 Grafton, Wisconsin (US); Cors, Mark W., 53235 St. Francis, Wisconsin (US); Gerard G., Geiger, 53037 Jackson, Wisconsin (US)
(74) Representative: Hernandez, Yorck

(56) References cited:
- US-A- 5 961 081
- US-B1- 10 920 910

## Description

### INCORPORATION BY REFERENCE

This application claims the benefit of U.S. Provisional Patent Application Serial No. 63/499,109 filed on April 28, 2023, titled "Cradle Mounts," and claims the benefit of U.S. Provisional Application No. 63/591,911, filed October 20, 2023, titled "Cradle Mounts,".

### BACKGROUND

A fixing is used to attach one or more components to a workpiece (e.g., a support beam, a housing). Fixings are frequently used in machinery installations to locate a component in a fixed position relative to other components and/or equipment. A fixing may include a mounting section configured to attach to the workpiece. A fixing may also include an object support that is configured to receive, secure, and/or support one or more components. Examples of object supports include, but are not limited to, clamps, clips, mounts, and the like. One type of a fixing is a cable tie mount fixing, which includes a cable tie passageway object support that is configured to receive a cable tie looped therethrough. In such a configuration, a cable tie can be used to bundle a component and/or to hold a bundle of one or more components to the cable tie mount fixing.

In one cable tie mount fixing use case, an installer (e.g., user) is tasked with routing one or more components (e.g., cables) between multiple fixings located along a component path (e.g., along the frame of a piece of machinery). In this example, the installer might attach a first cable to a first fixing utilizing a first cable tie, then attach the first cable to a second fixing located a distance away from the first fixing, then attach the first cable to a third fixing located a distance away from the second fixing utilizing a second cable tie, and so on. Then, the installer might attach a second cable to the first fixing utilizing a third cable tie, then attach the second cable to the second fixing utilizing a fourth cable time, and so on, repeating the process with additional cables. After all cables are "strung" between the fixings, the installer might then return to each fixing, cut off the cable ties connecting to the fixing, and fasten the cables together utilizing a final cable tie to form a unitary bundle of the cables. The unitary bundle of cables may be further attached to the fixing using the final cable tie or an additional cable tie.
US 5 961 081 A1 discloses a support clip for supporting cable in a generally horizontal position. The support clip comprises one generally J-shaped hook having a central cable supporting portion and first and second legs extending up from opposite ends of the central cable supporting portion. The clip further comprises a retaining member movable from a cable receiving position in which the retaining member is attached to the first leg and held in a position in which the retaining member does not interfere with insertion or removal of the cable in or from the support clip, to a cable retaining position in which the retaining member extends from the first leg to the second leg generally parallel to the central cable supporting portion to retain the cable within the hook of the support clip, and back to its cable receiving position.
US 10 920 910 B1 discloses a stackable cable hanger for supporting bundles of communications cables with the center radius of the bundle spread over the opening of the cable hanger. The cable hanger includes a cable tray with an upward extending inner arm and an upward extending outer arm. A cable tray extends between the arms. An arcuate surface on the cable tray provides a gentle bend radius to any cable bundles laid on the tray. Arcuate transitions on lateral ends of the cable tray provide a curved transition between the tray and the arms. Mounting holes are on the top and bottom of the inner arm enable attachment of the hanger to a support surface and vertical stacking of multiple hangers to create multiple tiers of cable bundles. A tie down loop on the inner arm and on the outer arm enables closure of the hanger opening with a cable tie or similar closure device.

### SUMMARY

This document describes cable tie cradle mount fixings. The techniques described herein relate to a cradle mount fixing for attaching a component to a workpiece according to claim 1, the cradle mount fixing including: a body section, the body section having a body first end extending to a body second end, which defines a longitudinal axis, the body section including a cable tie guide configured for receiving a cable tie, the cable tie guide including a channel portion that extends along the body section longitudinal axis; a mounting section connected to the body section, the mounting section including: a connector configured for attachment to the workpiece; and an object support extending from the body section, the object support and body section defining a cradle therebetween, the object support including: a stand-off member having a member first end opposite a member second end, the stand-off member extending from the body section at the body first end; and a cradle arm, the cradle arm having a proximal end extending to a distal end, the proximal end of the cradle arm attaching to the member second end, the distal end of the cradle arm including a bundle retainer, the bundle retainer configured for retaining the component in the cradle.

In some aspects, the techniques described herein relate to a breakable cradle mount fixing according to claim 10.

This Summary is provided to introduce simplified concepts of cable tie cradle mount fixings, which are further described below in the Detailed Description and are illustrated in the Drawings. This Summary is not intended to identify essential features of the claimed subject matter, nor is it intended for use in determining the scope of the claimed subject matter, which is solely limited by the wording of the appended claims.

### BRIEF DESCRIPTION OF THE DRAWINGS

The details of one or more aspects of cable tie cradle mount fixings are described with reference to the following Drawings, in which the use of the same numbers in different instances may indicate like features and/or components.
FIG. 1 is a schematic illustration of a system including a cable tie cradle mount fixing.
FIG. 2A is a perspective view of a cable tie cradle mount fixing.
FIG. 2B is a first side view of the cable tie cradle mount fixing of FIG. 2A.
FIG. 2C is a bottom side view of the cable tie cradle mount fixing of FIG. 2A.
FIG. 2D is a cross-sectioned view of the cable tie cradle mount fixing of FIG. 2B along lines 2D-2D, illustrating the environment.
FIG. 3A is a front side perspective view of a cable tie cradle mount fixing.
FIG. 3B is a bottom side view of the cable tie cradle mount fixing of FIG. 3A.
FIG. 3C is a first cross-sectioned view of the cable tie cradle mount fixing of FIG. 3A, illustrating the environment.
FIG. 3D is a second cross-sectioned view of the cable tie cradle mount fixing of FIG. 3A, illustrating the environment.
FIG. 4A is a perspective view of a cable tie cradle mount fixing in a connected state.
FIG. 4B is a cross-sectioned view of the cable tie cradle mount fixing of FIG. 4A, illustrating the environment.
FIG. 4C is an exploded perspective view of the cable tie cradle mount fixing of FIG. 4A in a separated state.
FIG. 5A is a perspective view of a cable tie cradle mount fixing, not according to the invention.
FIG. 5B is a side view of the cable tie cradle mount fixing of FIG. 5A, illustrating the environment in a wall-mount installation.
FIG. 5C is a side view of the cable tie cradle mount fixing of FIG. 5A, illustrating the environment in an overhead installation.

### DETAILED DESCRIPTION

### Overview

Described and illustrated are aspects of improved fixings (e.g., cable tie cradle mount fixings) that are configured for receiving, securing, and/or supporting one or more bundles of one or more components on or to a workpiece (e.g., support structure, vehicle chassis, panel, frame rail, housing, and the like). A cable tie cradle mount fixing may be utilized in a system that also includes a component, a workpiece, and/or a cable tie.

The component may include one or more objects (e.g., elongated articles, wires, hoses, tubes, cables, and the like) and bundles thereof. The workpiece may include one or more support structures (e.g., a vehicle chassis, a panel, a frame rail, a support beam, a housing, or the like). The workpiece may include a mounting aperture defined therein (e.g., a slot, a channel, a bore, a threaded hole, and the like) and/or a mounting surface.

The cable tie (e.g., strapping material, a hook-and-loop fastening strap, a plastic band, a metal band, string, twine, a wire, and the like) is utilized to attach one or more components together into one or more bundles and/or to attach one or more components to the cable tie cradle mount fixing. In aspects, a cable tie includes a head end and a tail end. The head end includes a locking head, and the tail end includes an elongated strap that extends from the locking head. The elongated strap may be configured for insertion through the locking head to form a loop (e.g., a loop around a component or bundle of components). The locking head may include a pawl mechanism configured for engaging strap serrations defined on the elongated strap, thereby retaining the strap relative to the locking head. The locking head may include a release feature (e.g., unlocking tab, unlocking lever) configured to permit the pawl mechanism to be released from engagement with the strap serrations of the strap, thereby enabling the cable tie to be removed from securing the component(s). The release feature may be configured to enable an operator to digitally manipulate (e.g., utilizing a finger of the operator, utilizing a tool) the release feature to disengage the pawl teeth on the pawl from engagement with the strap serrations. Disengagement of the pawl teeth from the strap serrations permits the elongated strap to be withdrawn from the locking head and the cable tie to be removed from securing the component(s).

The cable tie cradle mount fixing (referred to herein as a "fixing") includes a body (e.g., body section) that includes a mounting section. The mounting section is configured to attach the fixing to the workpiece at a desired location. A mounting aperture and/or a mounting surface of the workpiece may be configured to receive a connector of the mounting section of the fixing. In aspects, the connector is a fastener aperture (e.g., a recessed fastener aperture) that is defined through the mounting section, wherein the connector is configured to receive a fastener (e.g., a threaded bolt, a screw, a M5 stud mount, a M6 stud mount) therethrough. The fastener is configured to engage the workpiece (e.g., engage a mounting aperture that is defined in the workpiece). In another example, the connector may be a screw attachment that fastens with a screw and T-nut (e.g., Tee nut) to the workpiece (e.g., a #8 (M4) screw that is configured for attachment into a panel surface or with a T-nut in frame). In another example, the mounting section may utilize an adhesive fastener to mount to the mounting surface of the workpiece and the connector may be a surface of the mounting section to which the adhesive fastener is applied. The adhesive fastener may be a double-sided adhesive tape, a double-stick adhesive foam, a pressure-sensitive adhesive tape, and the like. In other aspects, the workpiece may attach to the fixing via an elongated fastener (e.g., a stud, a threaded bolt) that extends from the workpiece, by the mounting section clamping onto an edge of the workpiece, and the like.

The fixing further includes an object support that is configured for supporting component(s) on the fixing. In aspects, the object support is a cradle mount that is configured to receive, secure, and/or support one or more components. The object support includes a stand-off member and more cradle arms. The stand-off member spaces the cradle arm(s) apart from the body section. The stand-off member further provides a support base configured to support components held by the object support, both before and after application of a cable tie. The stand-off member may extend from the body section orthogonally. The cradle arm(s) extend from the stand-off member. In aspects, the cradle arm(s) extend from the stand-off member orthogonally.

The body section and the object support define a cradle therebetween. For example, an open-ended cradle may be defined between the body section, the stand-off member of the object support, and the cradle arm(s) of the object support. The cradle is configured to temporarily hold (e.g., by cradling) one or more components or bundles of components (collectively a "string") close to a desired mounting location (e.g., on a workpiece) while the installer is routing the components along a routing path. The cradle is configured to loosely (e.g., without utilizing a cable tie to attach the components to the fixing) hold the components in place, while they are being strung. Once the components are routed, the installer may then bundle the components together into one or more bundles. In aspects, the components are bundled through use of a cable tie. In this way, an installer does not need to use temporary strapping material to create temporary bundles. Instead, the installer can route all of the components and then apply the cable tie to create the bundle(s). Doing so avoids the need for the installer to, for every new component that is added to a string, remove temporary strapping material (e.g., by cutting a cable tie) and add new strapping material (e.g., add a new cable tie). This is in contrast to some prior systems where for every new component that is added to a string, the existing bundle would need to be held in place while the existing cable ties are cut, and new cable ties are re-added. Loosely holding the component(s) in place while they are being strung decreases the time and labor involved in running component(s) during an installation process. The component(s) may attach to the object support via a cable tie.

The described fixings simplify component installation and rework. When routing components, the components stay in place. This allows for installation verification before the need to fasten the components into a bundle to the fixing. This reduces component installation time, simplifies component installation and rework, and facilitates installation verification (e.g., by a supervisor) before the final bundle is formed and attached to the cable tie cradle mount fixing. A cable tie cradle mount fixing may temporarily hold one or more components along a routing path until an installer is ready to fix the routed components in place along the routing path. The described fixings further enable an installer to move and/or reposition a cradle mount while components retained in a cradle are retained therein, before a cable tie is fastened together (e.g., cinched down). Further, an installer does not need to use temporary strapping material to create temporary bundles. Instead, the installer can route all of the components and then apply the cable tie to create the bundle(s). Doing so avoids the need for the installer to, for every new component that is added to a string, remove temporary strapping material (e.g., by cutting a cable tie) and add new strapping material (e.g., add a new cable tie). In this way, the time and labor involved in routing components along a routing path during an installation process is decreased.

The fixing includes a cable tie mount that includes at least one aperture (e.g., slot) that is configured to receive the cable tie that is utilized to connect the component(s) to the fixing (e.g., to the support base of the stand-off member). According to the invention, the cable tie mount is a cable tie guide that is configured to receive an end of the cable tie (e.g., a tail of the cable tie) and guide it through the fixing to orient the cable tie in a position where the installer can create a bundle from a component(s) held in the cradle and/or attach the component(s) to the fixing. The cable tie guide may be defined, at least in part, in the body section as a trough. In aspects, the trough may include at least one recessed, open-ended trough. In some aspects, the open-ended trough is defined between two guide flanges. The trough may run the length of the cradle, so as to provide adjustable attachment to component(s) and bundles of component(s) of varying sizes. The trough may be oriented orthogonally to a length of one or more components held in the cradle. The cable tie guide is defined in the body section and may be defined also in the stand-off member. The cable tie guide further comprises a pass-through that is defined between an upper opening and a lower opening. The pass-through is located in at least one of the body section or the stand-off member, adjacent to the body second end.

In such a configuration, the installer can insert an end of a cable tie into the cable tie guide, which will route the cable tie into the trough. The installer can then further insert the cable tie to pass through the pass-through and exit the pass-through. The installer can then grasp the end of the cable tie, loop it around an outside lower portion of the stand-off member and over the component, and connect the ends of the cable tie together to bundle the component(s) on the support base of the stand-off member. The cable tie guide eliminates common obstructions for faster installation by the installer and/or maintains clear space to insert cable ties. In this way, the time and labor involved in routing components along a routing path during an installation process is decreased.

The cable tie guide may include a ramped portion that is configured to guide (e.g., lead in) an end (e.g., tail end) of the cable tie into the cable tie guide without the end of the cable tie snagging on an end of the fixing. In this way, the time and labor involved in routing components along a routing path during an installation process is decreased. For example, the installer can quickly, without needing to spend time specifically directing the end of the cable tie into the cable tie guide, insert the cable tie into the cable tie guide at either end to start a fastening procedure.

Because the component(s) may be tightly bound (e.g., compressively) with a cable tie, if a bundle of components needs to be reworked (e.g., to add one or more components to and/or remove or more components from the bundle), it can be difficult for an installer to cut off the cable tie without causing damage (e.g., nicking) to the component(s). The fixing may define at least one cut director that includes features and/or geometry that are configured to protect the component(s) from damage when an installer cuts a fixed cable tie off the fixing. The cut director supports the cable tie spaced apart from a surface (e.g., face) of the fixing. For example, the cut director may define a channel (e.g., a groove) that is configured to receive a cutting tool while an installer applies a cutting force (e.g., while an installer applies a cutting force to a handle of diagonal pliers). In this way, the cut director is configured to receive a cable tie that spans the channel. The channel serves as a guide for an installer to aim for when the installer removes a cable tie from a bundle of component(s) using a cutting device (e.g., a diagonal plier tool (e.g., wire cutters, side cutters), a bladed cutter (e.g., a knife), and the like). In this way, damage to the component(s) caused when removing a cable tie (e.g., by cutting during a rework process) is prevented. Further, through such protection of the components from damage when cutting off a cable tie, rework is avoided, which decreases the time and labor involved in running cables during an installation process.

The fastener and/or the connector may be accessible to the installer when the component(s) are attached to the fixing. In this way, the fastener can be accessed by the installer without first removing the attached component(s) from the object support. For example, the fastener may be accessible around a bundle formed of the component(s) by a cable tie, which enables an installer to manipulate the fastener to attach or detach the fixing from the workpiece. This decreases the time and labor involved in running cables during an installation process.

### Cable Tie Cradle Mount Fixings

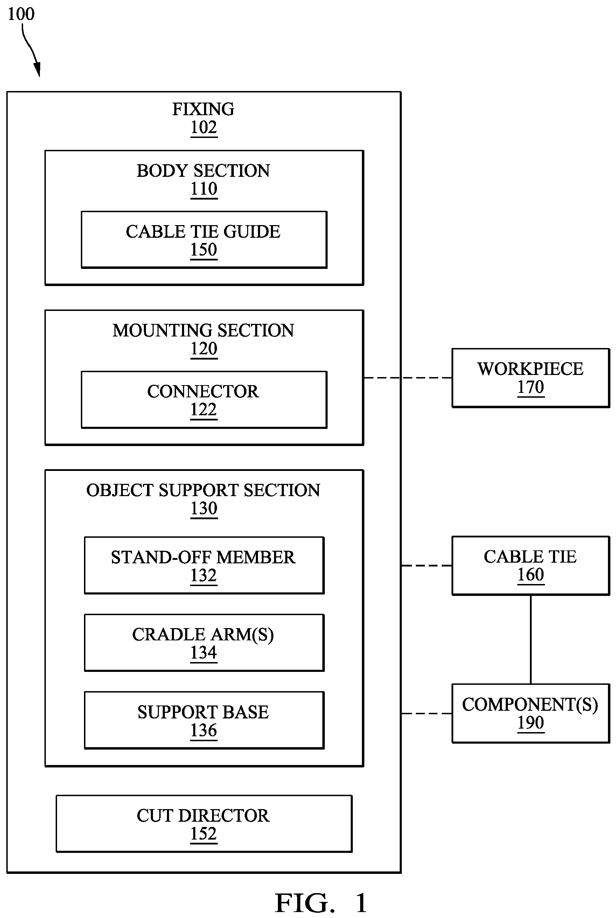

FIG. 1 is a schematic illustration of a system 100 that includes a cable tie cradle mount fixing 102 (aka fixing 102, cradle mount fixing 102), a cable tie 160, a workpiece 170, and component(s) 190. The fixing 102 is configured for receiving, securing, and/or supporting the component(s) 190 relative to the workpiece 170. The cable tie 160 may be utilized to attach the component(s) 190 together into one or more bundles and/or to attach the component(s) 190 to the fixing 102.

The fixing 102 includes a body section 110, which includes a mounting section 120.
The fixing 102 is configured for attachment to the workpiece 170 at a desired location via the mounting section 120. The mounting section 120 of the fixing 102 is attached to the workpiece 170 through a connector 122. The connector 122 may include any common connection manner, including but not limited to a fastener (e.g., a blind hole fastener, a clamp fastener, a mechanical fastener, an arrowhead fastener, a fir-tree fastener, a mounting edge clip, a twist-lock fastener configured for receipt into the slot of a rail, a weld stud mount, a cable attachment, a hose attachment), an adhesive fastener, a friction fit, and the like. The connector 122 may be an aperture (e.g., mounting hole) that is defined through the mounting section 120, the aperture configured to receive a fastener (e.g., a bolt, a screw) that engages a mounting aperture (e.g., a slot, a channel, a bore) that is defined in the workpiece 170. In other aspects, the connector 122 may be configured to engage an elongated fastener (e.g., a stud, a threaded bolt) extending from the workpiece 170, may be configured to clamp onto an edge of the workpiece 170 (e.g., utilizing an edge clip), and/or the like.

The fixing 102 includes an object support 130, which is configured to receive, secure, and/or support component(s) 190. The fixing 102 is configured to temporarily hold (e.g., by cradling) component(s) 190 (collectively a "string") close to a desired mounting location (e.g., on the workpiece 170) while an installer is routing the component(s) 190 (e.g., while the components are being "strung"). Once the component(s) 190 are routed, the installer may then bundle the component(s) 190 together into one or more bundles and/or may attach the component(s) 190 to the object support 130 via the cable tie 160.

The object support 130 includes a stand-off member 132 and more cradle arms 134 (e.g., cradle guideposts). The stand-off member 132 spaces the cradle arm(s) 134 apart from the body section 110. The stand-off member 132 includes a support base 136 that is configured to support the component(s) 190 held by the object support 130, for example, before and after application of the cable tie 160 that attaches the component(s) 190 to the object support 130. A cradle is defined between the body section 110, the stand-off member 132, and the cradle arm(s) 134. The cradle may be open-ended. The cradle is configured to temporarily hold one or more component(s) 190 close to a desired mounting location while the installer is routing the component(s) 190 along a routing path. The cradle arm(s) 134 extend from the stand-off member 132. The cradle arm(s) 134 may extend from the stand-off member 132 orthogonally or generally orthogonally. In aspects, the stand-off member 132 is curved, the cradle arm(s) 134 are curved, and/or the stand-off member 132 and the cradle arm(s) 134 are curved. The cradle arms 134 may have different lengths.

The fixing 102 includes a cable tie guide 150 that is configured to receive an end of the cable tie 160 (e.g., a tail of the cable tie) and guide it through the fixing 102 to orient the cable tie 160 in a position where the installer can form a loop of the cable tie 160. The cable tie guide 150 may be a trough-shaped passage (e.g., channel) that is defined in the body section 110. A portion of the cable tie guide 150 may be open-ended, and the cable tie guide 150 may be recessed within the body section 110. The cable tie guide 150 may extend at least a portion of a length of the object support 130, so as to provide adjustable attachment to bundles of component(s) 190 of varying sizes. The cable tie guide 150 may be orthogonal to an orientation of component(s) 190 held in the cradle. The cable tie guide 150 is defined i the body section 110 and, in aspects, also in the stand-off member 132.

The fixing 102 may define at least one cut director 152 that includes features and/or geometry that are configured to protect the component(s) 190 from damage when an installer cuts a fixed cable tie 160 off the fixing 102. The cut director 152 supports the cable tie 160 spaced apart from a surface (e.g., face) of the fixing 102. For example, the cut director 152 may define a channel (e.g., a groove) that is configured to receive a cutting tool while an installer applies a cutting force (e.g., while an installer applies a cutting force to diagonal pliers). In this way, the cut director 152 is configured to receive a cable tie 160 that spans the channel. The channel serves as a guide for an installer to aim for when the installer removes a cable tie 160 from a bundle of component(s) 190 using a cutting device (e.g., a diagonal plier tool (e.g., wire cutters, side cutters), a bladed cutter (e.g., a knife), and the like). The channel may be defined in the fixing 102, for example, between a pair of a first ridge and a second ridge that extend from a surface of the fixing 102 (e.g., an outside surface of the stand-off member 132). The ridges may be parallel to one another. In other aspects, one or more channels may be defined on one or more surfaces of the fixing 102 on one or more of the body section 110, the mounting section 120, and/or the object support 130. The one or more channels are configured for receiving a cutting tool therein. The first ridge and the second ridge may elevate a strap of the cable tie 160 above the outside surface of the fixing 102. In other aspects, the channel is defined on or within the surface of the fixing 102. In some aspects of fixings, a cut director 152 is not present. In one aspect, a first end (e.g., tail end) of the cable tie 160 is wrapped through at least a portion of the cable tie guide 150, around an outside of the stand-off member 132, across the cut director 152 (e.g., cutting guide), and through a slot (between the cradle arms) to attach to itself (e.g., to the second end (e.g., head end) of the cable tie 160) to form a bundle on the support base.

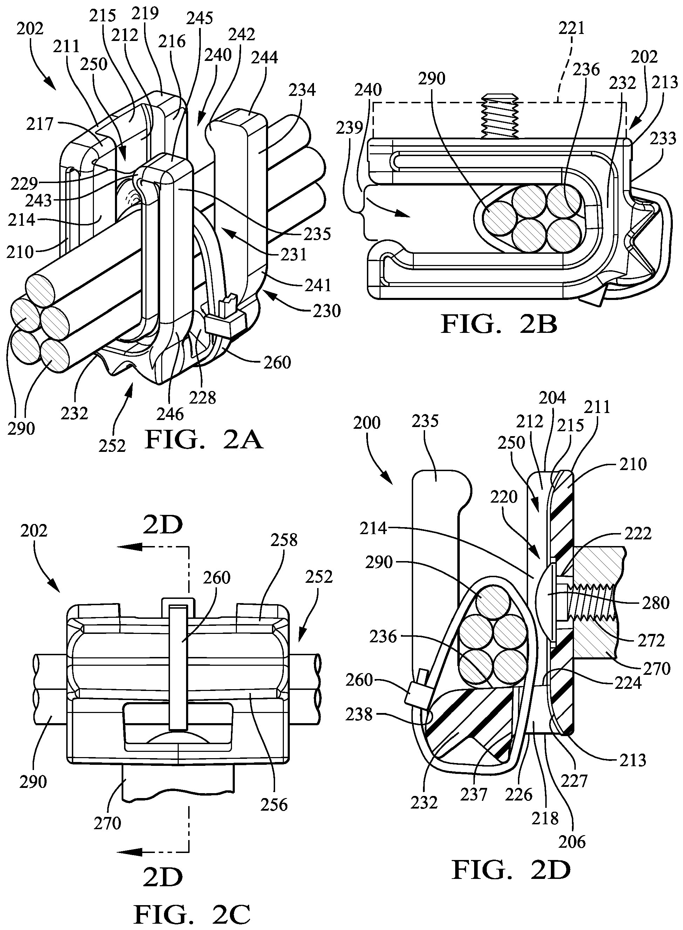

Referring now to FIGs. 2A-2D, illustrated is a system 200 that includes a cable tie cradle mount fixing 202 (fixing 202), a cable tie 260, a workpiece 270, and component(s) 290. The fixing 202 is configured for receiving, securing, and/or supporting the component(s) 290 relative to the workpiece 270. The fixing 202 is similar to the fixing 102 illustrated in FIG. 1 and described above, except as detailed below. Thus, the fixing 202 includes a body section 210, a mounting section 220, a connector 222, an object support 230, a stand-off member 232, cradle arm(s) (e.g., a cradle arm 234, a cradle arm 235), a support base 236, a cradle 240, and a cable tie guide 250. The workpiece 270, which is illustrated in FIG. 2D, is a support structure surface (e.g., a wall), and the component(s) 290 illustrated in FIGs. 2A-2D are cables. The workpiece 270 is not illustrated in FIGs. 2A-2C for simplicity of illustration.

The fixing 202 is configured for attachment to the workpiece 270 at a desired location via the mounting section 220. The mounting section 220 attaches to the workpiece 270 through the connector 222. The connector 222 is a fastener aperture (e.g., a recessed fastener aperture) that is defined through the mounting section 220. The connector 222 is configured to receive a fastener 280 (e.g., a threaded bolt) therethrough. The fastener 280 is configured to engage the workpiece 270 (e.g., engage a mounting aperture 272 that is defined in the workpiece 270). In other aspects, the mounting section 220 may utilize an adhesive fastener 221 to mount to the workpiece 270, as is illustrated in dotted-line fashion in FIG. 2C. The adhesive fastener 221 may be a double-sided adhesive tape, a double-stick adhesive foam, a pressure-sensitive adhesive tape, and the like.

The cable tie 260 is utilized to bundle component(s) 290 together and/or to hold component(s) 290 to the fixing 202 at the object support 230. The object support 230 includes the stand-off member 232 and more cradle arms (e.g., cradle arm 234, cradle arm 235). The stand-off member 232 includes a member first end 237 opposite a member second end 238. The stand-off member 232 spaces the cradle arm(s) apart from the body section 210. The stand-off member 232 further provides a support base 236 that is configured to support the component(s) 290 held by the object support 230. The cradle arm(s) extend from the stand-off member 232 and are configured to at least temporarily retain the component(s) 290 in the cradle 240 (e.g., before application of the cable tie 260). In aspects, the cradle arm(s) (e.g., cradle arm 234, cradle arm 235) extend from the stand-off member 232 generally orthogonally. A cradle arm (e.g., cradle arm 234, cradle arm 235) includes a proximal end (e.g., proximal end 241, proximal end 246) that extends to a distal end (e.g., distal end 244, distal end 245). The proximal end (e.g., proximal end 241, proximal end 246) of the cradle arm is attached to the second end 238 of the stand-off member 232).

The cradle arm(s) (e.g., cradle arm 234, cradle arm 235) define a cable tie slot 231 therebetween. The cable tie slot 231 is configured for receiving a cable tie 260 therein for fastening down one or more component(s) 290 to the support base 236. The stand-off member 232 may include at least one notched portion 228 that is located on the stand-off member 232 opposite a pass-through 218. The notched portion 228 may include side walls that align the cable tie 260 relative to the support base 236. The body section 210 and the object support 230 define a cradle 240 therebetween. For example, an open-ended cradle 240 may be defined between the body section 210, the stand-off member 232 of the object support 230, and the cradle arm(s) (e.g., cradle arm 234, cradle arm 235) of the object support 230. The cradle 240 may be U-shaped.

The fixing 202 includes a cable tie guide 250 that is configured to receive an end of the cable tie 260 (e.g., a tail of the cable tie) and guide it through the fixing 202 to orient the cable tie 260 in a position where the installer can attach the component(s) 290 to the support base 236 of the stand-off member 232. The cable tie guide 250 may extend from the first end 204 to a second end 206. The cable tie guide 250 includes a recessed, open-ended trough 212 (e.g., a channel). In some aspects, the open-ended trough 212 is defined between two guide flanges (guide flange 214, guide flange 216) that are spaced apart. The open-ended trough 212 may run a length of the object support 230, so as to provide adjustable attachment to bundles of varying sizes and may be orthogonal to an orientation of a component(s) 290 held in the cradle 240. The cable tie guide 250 may include a first end 211 and a second end 213. The cable tie guide 250 is defined in the body section 210 or, in aspects, also in the stand-off member 232.

The cable tie guide 250 includes a pass-through 218 that is defined between a first opening 224 and a second opening 226, for example, as illustrated in FIG. 2D. The pass-through 218 is located in at least one of the body section 210 or the stand-off member 232, adjacent to the body second end. In such a configuration, the installer can insert a first end (e.g., the tail) of the cable tie 260 into the cable tie guide 250 (e.g., at a first end 211 of the cable tie guide 250) and the cable tie guide 250 will route the cable tie 260 into the first opening 224 of the pass-through 218. The installer can then advance the cable tie 260 farther into the cable tie guide 250 to cause the first end of the cable tie 260 to continue within the pass-through 218 and exit the pass-through 218 via the second opening 226. The installer can then grasp the first end of the cable tie 260, loop it around an outside lower portion of the stand-off member 232 and over the component(s) 290, and connect the first and second ends of the cable tie 260 together to bundle the component(s) 290 on the support base 236 of the stand-off member 232. Alternatively, the installer could insert the first end of the cable tie 260 into the cable tie guide 250 at a second end (e.g., second opening 226) of the cable tie guide 250 and route the cable tie 260 in a similar manner in the opposite direction. Through such a process, a bundle of one or more component(s) 290 may be tightly bound (e.g., compressively) with one or more cable ties 260.

The first end 211 of the open-ended trough 212 may include a first ramped portion 215 that is configured to guide (e.g., lead in) an end (e.g., tail end) of a cable tie 260 into the open-ended trough 212 without the cable tie end snagging on a first end 211 of the fixing 202. The second opening 226 of the pass-through 218 may include a second ramped portion 227 that is configured to guide an end of a cable tie 260 into the pass-through 218 without the cable tie end snagging on a second end of the fixing 202.

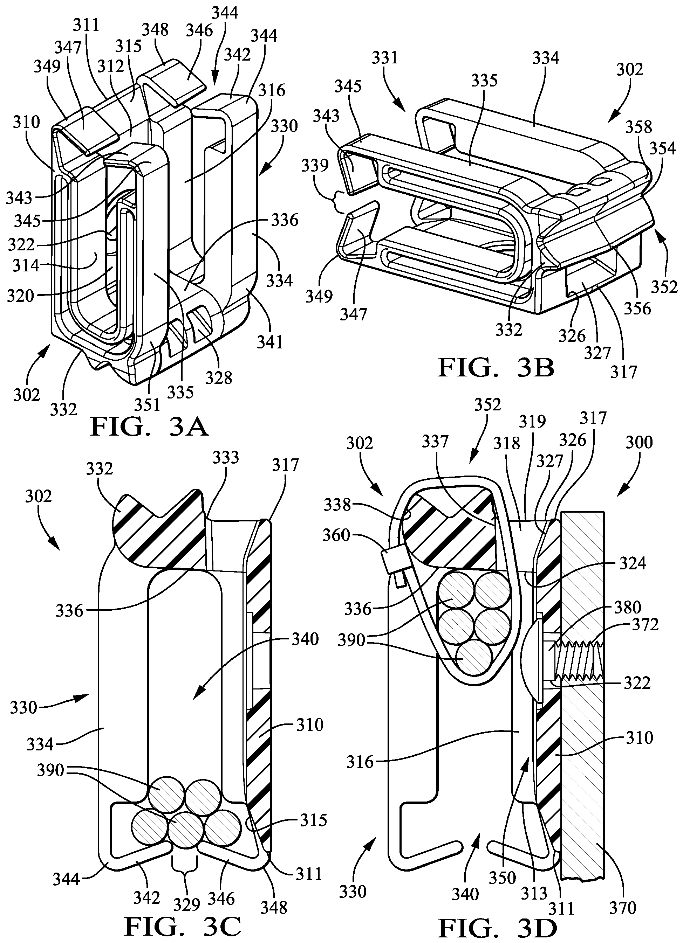

A cradle arm (e.g., cradle arm 234, cradle arm 235) includes at least one bundle retainer (e.g., bundle retainer 242, bundle retainer 243) that is configured for retaining the component(s) 290 in the cradle 240. The bundle retainer (e.g., bundle retainer 242, bundle retainer 243) may extend from a distal end (e.g., distal end 244, distal end 245) of the cradle arm (e.g., cradle arm 234, cradle arm 235). The cradle arm may extend at a proximal end from the stand-off member 232. In the aspect illustrated in FIGs. 2A-2D, a first bundle retainer 242 extends from the distal end 244 of the cradle arm 234 and a second bundle retainer 243 extends from the distal end 245 of the cradle arm 235. The first and second bundle retainers 242, 243 illustrated in FIGs. 2A-2D are bulbous-shaped extensions. In the aspects illustrated in FIGs. 3A-3D, first and second bundle retainers (described below) are flexible tabs. In other aspects, one or more of the bundle retainers (e.g., bundle retainer 242, bundle retainer 243) may be flexible tabs, as described with respect to the bundle retainers (e.g., bundle retainer 342, bundle retainer 343, bundle retainer 346, bundle retainer 347) illustrated in FIGs. 3A-3D and described below. In the aspect illustrated in FIGs. 2A-2D, the distal portions of the guide flange 214 and the guide flange 216 are planar.

The guide flange 214 includes a distal end 217, and the guide flange 216 includes a distal end 219. The distal end 217 of the guide flange 214 is spaced apart from the distal end 245 of the cradle arm 235 and defines an entrance 229 to the cradle 240 therebetween. The distal end 219 of the guide flange 216 is spaced apart from the distal end 244 of the cradle arm 234 and defines an entrance 239 to the cradle 240 therebetween. Upon the insertion of the component(s) 290 through an entrance (e.g., entrance 229, entrance 239), the component(s) 290 are retained in the cradle 240.

The cradle 240 may be configured for gravity-fed loading, wherein the opening of the cradle 240 faces in an upward direction (e.g., illustrated in FIG. 2A and FIG. 2D, which are illustrated as oriented for a vertical, open-top mount, for example, against a wall surface) or in an outward direction (e.g., illustrated in FIGs. 2B and 2C, which are configured for a horizontal mount, for example, mounting under a support structure). In both the vertical, open-top mount position and the horizontal mount position (e.g., horizontal orientation), as component(s) 290 are loaded into the cradle 240 (e.g., through entrance 229, through entrance 239), the force of gravity may hold the component(s) 290 within the cradle 240. When the fixing 202 is installed in a horizontal orientation, the bundle retainer (bundle retainer 242, bundle retainer 243) may limit the lateral movement of a component placed within the cradle 240 to keep the component within the cradle 240.

The fixing 202 may define at least one cut director 252 that includes features and/or geometry that are configured to protect the component(s) 290 from damage when an installer cuts a fixed cable tie 260 off the fixing 202. The cut director 252 supports the cable tie 260 spaced apart from a surface (e.g., face) of the fixing 202. For example, in the aspect illustrated in FIGs. 2A-2D, the cut director 252 defines a channel 254 (e.g., a groove) that is configured to receive a cutting tool while an installer applies a cutting force (e.g., while an installer applies a cutting force to diagonal pliers). In this way, the cut director 252 is configured to receive a cable tie that spans the channel 254. The channel 254 serves as a guide for an installer to aim for when the installer removes a cable tie 260 from a bundle of component(s) 290 using a cutting device (e.g., a diagonal plier tool (e.g., wire cutters, side cutters), a bladed cutter (e.g., a knife), and the like).

The channel 254 may be defined in the fixing 202. For example, in the aspect illustrated in FIGs. 2A-2D, the channel 254 is defined between a pair of ridges (e.g., first ridge 256, second ridge 258) that extend from a surface of the fixing 202, namely an outside surface 233 of the stand-off member 232. The ridges may be parallel to one another. In other aspects, one or more channels (e.g., channel 254) may be defined on one or more surfaces of the fixing 202 on one or more of the body section 210, the mounting section 220, and/or the object support 230. In the aspect illustrated in FIGs. 2A-2D, the first ridge 256 and the second ridge 258 elevate a strap of the cable tie 260 above the outside surface 233 of the fixing 202. In other aspects, the channel 254 is defined on or within the surface of the fixing 202. In some aspects of fixings, a cut director 252 is not present. In one aspect, a first end (e.g., tail end) of the cable tie 260 is wrapped through at least a portion of the cable tie guide 250, around an outside of the stand-off member 232, across the cut director 252 (e.g., cutting guide), and through the cable tie slot 231 (between the cradle arms) to attach to itself (e.g., to the second end (e.g., head end) of the cable tie) to form a bundle on the support base 236.

Referring now to FIGs. 3A-3D, illustrated is a system 300 that includes a cable tie cradle mount fixing 302 (fixing 302), a cable tie 360, a workpiece 370, and component(s) 390. The fixing 302 is configured for receiving, securing, and/or supporting the component(s) 390 relative to the workpiece 370. The fixing 302 is similar to the fixings (e.g., fixing 102, fixing 202) illustrated in FIG. 1 and FIGs. 2A-2D, which are described above, except as detailed below. Thus, the fixing 302 includes a body section 310, a mounting section 320, a connector 322, an object support 330, a stand-off member 332, cradle arm(s) (e.g., a first cradle arm 334, a second cradle arm 335), a support base 336, a cradle 340, and a cable tie guide 350. The workpiece 370, which is illustrated in FIG. 3D, is a support structure surface (e.g., a wall), and the component(s) 390 illustrated are cables. The workpiece 370 is not illustrated in FIGs. 3A-3C for simplicity of illustration. The body section 310 has a first end 311 extending to a second end 317.

The fixing 302 is configured for attachment to the workpiece 370 at a desired location via the mounting section 320. The mounting section 320 may attach to and/or be configured with the body section 310 of the fixing 302. The mounting section 320 is configured to attach to the workpiece 370 through a connector 322. As illustrated in FIG. 3A, the connector 322 is a fastener aperture (e.g., recessed fastener aperture) defined through the mounting section 320. The fastener aperture is configured to receive a fastener 380 (e.g., a threaded bolt) therethrough, which engages a surface of the workpiece 370 (e.g., engage a mounting aperture 372 defined in the workpiece 370). In other aspects, the mounting section 320 may utilize an adhesive fastener to mount to the workpiece 370, as is illustrated in dotted-line fashion in FIG. 2D as the adhesive fastener 221 with respect to the system 200.

The cable tie 360 is utilized to bundle component(s) 390 together and/or to hold component(s) 390 to the fixing 302 at the object support 330. The object support 330 includes a stand-off member 332 and more cradle arms (e.g., cradle arm 334, cradle arm 335). The stand-off member 332 includes a member first end 337 opposite a member second end 338. The stand-off member 332 spaces the cradle arms apart from the body section 310.
The stand-off member 332 further provides a support base 336 that is configured to support the component(s) 390 held by the object support 330. The cradle arm(s) extend from the stand-off member 332 and are configured to at least temporarily retain the component(s) 390 in the cradle 340 (e.g., before application of the cable tie 360). In aspects, the cradle arm(s) (e.g., cradle arm 334, cradle arm 335) extend from the stand-off member 332 generally orthogonally. A cradle arm (e.g., cradle arm 334, cradle arm 335) includes a proximal end (e.g., proximal end 341, proximal end 351) that extends to a distal end (e.g., distal end 344, distal end 345). The proximal end (e.g., proximal end 341, proximal end 351) of the cradle arm is attached to the second end 338 of the stand-off member 332.

The cradle arms (e.g., cradle arm 334, cradle arm 335) define a cable tie slot 331 therebetween. The cable tie slot 331 is configured for receiving a cable tie 360 therein for fastening down one or more component(s) 390 to the support base 336. The stand-off member 332 may include at least one notched portion 328 that is located on the stand-off member 332 opposite a pass-through 318. The notched portion 328 may include side walls that align the cable tie 360 relative to the support base 336. The body section 310 and the object support 330 define a cradle 340 therebetween. For example, an open-ended cradle 340 may be defined between the body section 310, the stand-off member 332 of the object support 330, and the cradle arm(s) (e.g., first cradle arm 334, second cradle arm 335) of the object support 330. The cradle 340 may be U-shaped.

The fixing 302 includes a cable tie guide 350 that is configured to receive an end of the cable tie 360 (e.g., a tail of the cable tie) and guide it through the fixing 302 to orient the cable tie 360 in a position where an installer can attach the component(s) 390 to the support base 336 of the stand-off member 332. The cable tie guide 350 may include a recessed, open-ended trough 312 (e.g., a channel). In some aspects, the open-ended trough 312 is defined between two guide flanges (guide flange 314, guide flange 316) that are spaced apart. The open-ended trough 312 may run a length of the object support 330, so as to provide adjustable attachment to bundles of varying sizes and may be orthogonal to an orientation of component(s) 390 held in the cradle 340. In aspects, the cable tie guide 350 is defined in one or more of the body section 310 or the stand-off member 332. The cable tie guide 350 may extend from the first end 313 to a second end 319.

The cable tie guide 350 includes a pass-through 318 that is defined between a first opening 324 and a second opening 326, for example, as illustrated in FIG. 3D. The pass-through 318 is located in at least one of the body section 310 or the stand-off member 332, adjacent to the body second end. In such a configuration, the installer can insert a first end (e.g., the tail) of the cable tie 360 into the cable tie guide 350 (e.g., at a first end 313 of the cable tie guide 350) and the cable tie guide 350 will route the cable tie 360 into the first opening 324 of the pass-through 318. The installer can then advance the cable tie 360 farther into the cable tie guide 350 to cause the first end of the cable tie 360 to continue within the pass-through 318 and exit the pass-through 318 via the second opening 326. The installer can then grasp the first end of the cable tie 360, loop it around an outside lower portion of the stand-off member 332 and over the component(s) 390, and connect the ends of the cable tie 360 together to bundle the component(s) 390 on the support base 336 of the stand-off member 332. Alternatively, the installer could insert the first end of the cable tie 360 into the cable tie guide 350 at a second end (e.g., second opening 326) of the cable tie guide 350 and route the cable tie 360 in a similar manner in the opposite direction. Through such a process, a bundle of one or more component(s) 390 may be tightly bound (e.g., compressively) with one or more cable ties 360.

The open-ended trough 312 may include a first ramped portion 315 that is configured to guide (e.g., lead in) an end (e.g., tail end) of a cable tie 360 into the open-ended trough 312 without the cable tie end snagging on the first end 313 of the cable tie guide 350 of the body section 310. The second opening 326 of the pass-through 318 may include a second ramped portion 327 that is configured to guide an end of a cable tie 360 into the pass-through 318 without the cable tie end snagging on a second end of the fixing 302.

The fixing 302 includes more bundle retainers that are configured for retaining the component(s) 390 in the cradle 340. The bundle retainers may be paired. The bundle retainers may be flexible tabs. In the aspect illustrated in FIGs. 3A-3D, the cradle arm 334 includes a bundle retainer 342 and the cradle arm 335 includes a bundle retainer 343. The bundle retainer 342 and bundle retainer 343 extend from respective distal ends (e.g., distal end 344, distal end 345) of the respective cradle arms (e.g., cradle arm 334, cradle arm 335). In this way, the bundle retainer 342 extends from the distal end 344 of the cradle arm 334 and the bundle retainer 343 extends from the distal end 345 of the cradle arm 335. The body section 310 defines a bundle retainer 347 aligned with, and spaced apart from, the bundle retainer 343. The body section 310 defines a bundle retainer 346 aligned with, and spaced apart from, the bundle retainer 342. Bundle retainer 346 and/or bundle retainer 347 may be located at a distal end (e.g., distal end 348, distal end 349) of a guide flange (e.g., guide flange 314, guide flange 316). A bundle retainer and/or a cradle arm may be resilient. In other aspects, one or more of the bundle retainers may be a bundle retainer, as described above with respect to FIGs. 2A-2D.

The spaced apart bundle retainers define an entrance (e.g., entrance 329, entrance 339) to the cradle 340. The entrance includes a width. The width may be narrower than a diameter of one or more of the component(s) 390. The cradle 340 may be configured for gravity-fed loading, where the fixing 302 is oriented on the workpiece 370 so that the opening of the cradle 340 faces in an upward direction (e.g., the first vertical orientation as illustrated in FIG. 3A) or faces in an outward direction (e.g., the horizontal orientation illustrated in FIG. 3B). In the upward-facing and outward-facing directions, as component(s) 390 are loaded into the cradle 340 (e.g., through entrance 329, through entrance 339), the force of gravity may hold the component(s) 390 within the cradle 340. When the fixing 302 is installed in the horizontal orientation, one or more of the bundle retainers (e.g., bundle retainer 342, bundle retainer 343, bundle retainer 346, bundle retainer 347) may limit the lateral movement of the component(s) 390 to keep the component within the cradle 340.

The cradle 340 may also be configured for bottom loading, where the fixing 302 is oriented on the workpiece 370 so that the opening of the cradle 340 faces in a downward direction (e.g., the second vertical orientation as illustrated in FIGs. 3C and 3D). In the downward direction, as component(s) 390 are loaded into the cradle 340 (e.g., through entrance 329, through entrance 339), the force of gravity may hold the component(s) 390 within the cradle 340 and against one or more of the bundle retainers (e.g., bundle retainer 342, bundle retainer 343, bundle retainer 346, bundle retainer 347) to keep the component(s) 390 within the cradle 340.

As component(s) 390 are inserted through the entrance (e.g., entrance 329, entrance 339), one or more of the bundle retainers or cradle arms may flex to permit the component(s) 390 to pass through the entrance. Upon the component(s) 390 passing through the entrance, the bundle retainer and/or the cradle arm may resiliently return to its original shape. In this way, as illustrated in FIG. 3C, upon the insertion of the component(s) 390 through the entrance (e.g., entrance 329, entrance 339), the component(s) 390 are retained in the cradle 340.

An outer surface of a bundle retainer (e.g., bundle retainer 342, bundle retainer 343, bundle retainer 346, bundle retainer 347) may define a guide portion that is configured to guide component(s) 390 into the cradle 340. In this way, it may be easy to push component(s) 390 into the cradle 340. In the cradle arms illustrated in FIGs. 3A-3D, the guide portions of the bundle retainers are canted in a direction towards the stand-off member 332. In such a configuration, the guide portions may be spring-loaded.

In FIG. 3C, a plurality of component(s) 390 have been inserted through the entrance 329 (and entrance 339 illustrated in FIG. 3B) and into the cradle 340. In FIG. 3D, the component(s) 390 held in the cradle 340 are illustrated as having been gathered together via a cable tie 360 and held against the support base 336 as a bundle, as described above with respect to the cable tie guide 350.

The fixing 302 may define at least one cut director 352. The cut director 352 is similar to the cut director 252 of the fixing 202 illustrated in FIGs. 2A-2D and described above, except as detailed below. Thus, the cut director 352 includes a channel 354 that is defined between a pair of ridges (e.g., first ridge 356, second ridge 358), which extend from a surface of the fixing 302 (e.g., an outside surface 333 of the stand-off member 332).

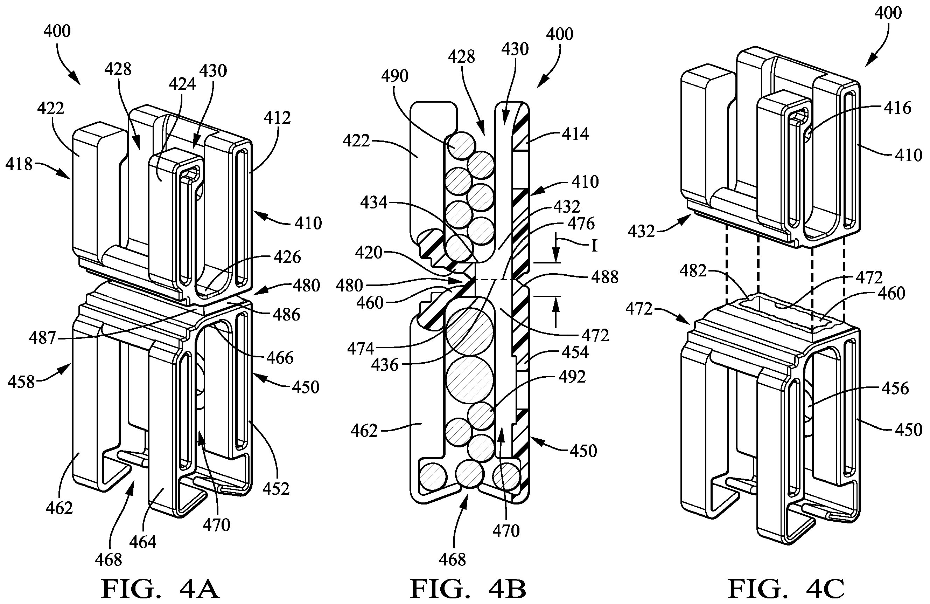

Referring now to FIGs. 4A-4C, illustrated is another aspect of a cable tie cradle mount fixing (e.g., fixing 400), which is configured for receiving, securing, and/or supporting one or more components (e.g., first component(s) 490, second component(s) 492) relative to a workpiece (e.g., workpiece 170 of FIG. 1). One or more cable tie(s) (e.g., cable tie 160 of FIG. 1) may be utilized to attach the component(s) to the fixing 400. The workpiece and cable tie(s) are not illustrated in FIGs. 4A-4C for simplicity of illustration.

The fixing 400 may include a first fixing part 410 and a second fixing part 450. The fixing 400, the first fixing part 410, and the second fixing part 450 are similar to the fixings (e.g., fixing 102, fixing 202, fixing 302) illustrated in FIG. 1, FIGs. 2A-2D, and FIGs. 3A-3D, which are described above, except as detailed below. Thus, each of the first fixing part 410 and the second fixing part 450 may include a body section (e.g., body section 412, body section 452), a mounting section (e.g., mounting section 414, mounting section 454), a connector (e.g., connector 416, connector 456), an object support (e.g., object support 418, object support 458), a stand-off member (e.g., stand-off member 420, stand-off member 460), cradle arm(s) (e.g., cradle arm 422, cradle arm 424, cradle arm 462, cradle arm 464), a support base (e.g., support base 426, support base 466), a cradle (e.g., cradle 428, cradle 468), and a cable tie guide (e.g., cable tie guide 430, cable tie guide 470).

The cable tie guide 430 includes a pass-through 432 that is defined between a first opening 434 and a second opening 436. The cable tie guide 470 includes a pass-through 472 that is defined between a first opening 474 and a second opening 476. In the aspect illustrated in FIG. 4B, the pass-through 432 of the cable tie guide 430 and the pass-through 472 of the cable tie guide 470 are aligned to define a strap passage that extends through both the first fixing part 410 and the second fixing part 450.

The fixing 400 may define at least one cut director (e.g., cut director 444, cut director 484). The cut director is similar to the cut director 252 of the fixing 202 illustrated in FIGs. 2A-2D and described above, except as detailed below. Thus, the cut director (e.g., cut director 444, cut director 484) includes a channel that is defined between a pair of ridges, which extend from a surface of the fixing 400 (e.g., first fixing part 410, second fixing part 450).

FIGs. 4A and 4B illustrate the fixing 400 in a connected state, with the first fixing part 410 and the second fixing part 450 connected at a breakable portion 480. To express it another way, the first fixing part 410 and the second fixing part 450 are joined at the breakable portion 480. The breakable portion 480 is configured to enable the fixing 400 to be separated (e.g., broken) into the first fixing part 410 and the second fixing part 450, as is illustrated in FIG. 4C. The breakable portion 480 is configured to break readily at a defined zone of weakness under a predetermined loading condition (e.g., a connection breaking force). The defined zone of weakness may be a line, zone, area, point, region, path, and the like. The defined zone of weakness may be intentionally incorporated during the manufacture of the material of the fixing 400 and/or through subsequent modification of the material of the fixing 400. The defined zone of weakness can be achieved through various techniques, such as the provision of one or more of a notch, a groove, a score line, consecutive holes, a perforation, variations in material thickness, a void, and/or other weakening features known in the art that would facilitate the breaking of a fixing along a predetermined path.

The breakable portion 480 may be formed of a polymeric material. The first fixing part 410 and/or the second fixing part 450 may be formed of the same or a different polymeric material. The polymeric material itself may exhibit some level of elasticity, but the defined line of weakness significantly reduces its resistance to breakage at that specific location.

The first fixing part 410 may be separated from the second fixing part 450 by breaking the fixing 400 at the breakable portion 480. The breakable portion 480 includes a defined snap point 482 (e.g., a fracture plane), along which the breakable portion 480 is configured to break under a predetermined loading condition (e.g., the application of a connection breaking force). In the aspect for FIGs. 4A-4C, the defined zone of weakness is illustrated as a snap point 482. The snap point 482 may be defined between the stand-off member 420 of the first fixing part 410 and the stand-off member 460 of the second fixing part 450. In the aspect of FIGs. 4A-4C, the defined zone of weakness (e.g., snap point 482) may include at least one notch defined in the fixing 400 at the snap point 482. A first notch 486, a second notch 487, a third notch 488, and/or a fourth notch (hidden from view) may be defined in the fixing 400 at the snap point 482. In the aspect of FIGs. 4A-4C, the cable tie guide 430 and the cable tie guide 470 join at the snap point 482. In this way, the cable tie guide 430 and cable tie guide 470 align to define a strap passage (e.g., a void) that extends through both the first fixing part 410 and the second fixing part 450. The strap passage may extend through the fixing 400 at the notch. As a result of the notches, sidewalls of the fixing 400 at the second opening 436 of the cable tie guide 430 and at the second opening 476 of the cable tie guide 470 are thinner, having a lesser material thickness, which facilitates the breaking of the fixing 400 at the snap point 482, upon application of a suitable force.

A user may break the breakable portion 480 at the line of the snap point 482, for example, by applying a force (e.g., a bending force, a snapping force, a twisting force) with one or more of the hands of the user, by using a tool to apply a prying action, by striking the fixing 400 at the breakable portion 480 with an object, by striking the fixing 400 on a surface at the breakable portion 480, and the like.

In aspects, the breakable portion 480 may not be broken at the line of the snap point 482 and the fixing 400 may be utilized with the first fixing part 410 and the second fixing part 450 connected together in their connected state. In other aspects, the breakable portion 480 is broken at the line of the snap point 482 and the first fixing part 410 and the second fixing part 450 of the fixing 400 are disconnected from one another and used in their separated state. In their separated state, the first fixing part 410 and the second fixing part 450 may be positioned separately from one another. In some aspects, in the separated state, one of the first fixing part 410 or the second fixing part 450 may not be utilized.

FIGs. 4A and 4B illustrate the fixing 400, the first fixing part 410, and the second fixing part 450 in a vertical mounting orientation, where they are configured for attachment to a vertical wall/panel (e.g., a workpiece) via a connector (e.g., via a screw mount, a double-stick adhesive foam mount, and the like, as described above with respect to fixing 102, fixing 202, and fixing 302). The cradle 440 of the first fixing part 410 is configured for top loading (e.g., gravity-fed loading) and retention of components, for example as illustrated in FIGs. 2A-2D. FIG. 4B illustrates the first fixing part 410 holding, by gravity, first component(s) 490. In aspects, a cable tie (not illustrated) may be utilized to bundle the first component(s) 490 into a bundle on the first fixing part 410, for example, through use of a cable tie guide as described above with respect to the aspects of FIG. 1, FIGs. 2A-2D, and FIGs. 3A-3D. The cradle 468 of the second fixing part 450 is configured for bottom loading of components, for example as illustrated in FIG. 1, FIGs. 2A-2D, and FIGs. 3A-3D, where the tabs retain bundles subject to gravity forces. In the aspect illustrated in FIG. 4B, the second fixing part 450 holds, retained in the cradle 468 by bundle retainers, at least one second component 492 in the cradle 468. In aspects, a cable tie (not illustrated) may be utilized to bundle the second component(s) 492 into a bundle on the second fixing part 450, for example, through use of a cable tie guide as described above with respect to the aspects of FIG. 1, FIGs. 2A-2D, and FIGs. 3A-3D.

The fixing 400 may be configured to position components (e.g., cable, bundles of cables) within the first fixing part 410 and the second fixing part 450 for isolation. In this configuration, in FIG. 4A, the first fixing part 410 is separated from the second fixing part 450 by an isolation distance (I), configuring the fixing 400 as a dual-separation cradle mount fixing. In this way, the stand-off member 420, breakable portion 480, and stand-off member 460 of the fixing 400 may operate as a mechanical divider between bundles of components held in the first fixing part 410 and bundles of components held in the second fixing part 450, enabling the separate routing of parallel bundles (e.g., to isolate one or more of power carrying components, data carrying components, and fluid carrying components from one another). Increased bundle isolation by user may be accomplished in the separated state, illustrated in FIG. 4C, and the user can apply custom isolation distance, if desired, by the user securing the first fixing part 410 and the second fixing part 450.

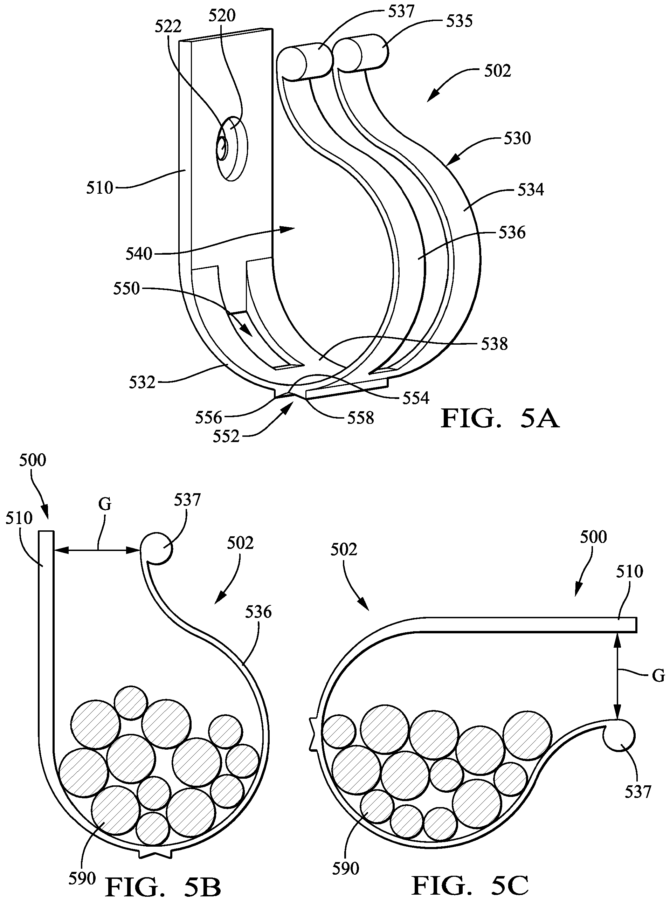

Referring now to FIGs. 5A-5C, illustrated is a system 500, not according to the invention, that includes a cable tie cradle mount fixing 502 (fixing 502) and components 590. The fixing 502 is a flexible spring-type cradle mount fixing, which is configured for receiving, securing, and/or supporting the components 590 relative to a workpiece (e.g., workpiece 170). The workpiece is not illustrated in FIGs. 5A-5C for simplicity of illustration, and the components 590 are not illustrated in FIG. 5A for simplicity of illustration.

FIG. 5A is a perspective view of the fixing 502, FIG. 5B is a side view of the fixing 502 that illustrates the environment in a wall-mount installation, and FIG. 5C is a side view of the fixing 502 that illustrates the environment in an overhead installation. The fixing 502 is similar to the fixings (e.g., fixing 102, fixing 202, fixing 302) illustrated in FIGs. 1-3D and described above, except as detailed below. Thus, the fixing 502 includes a body section 510, a mounting section 520, a connector 522, an object support 530, a stand-off member 532, one or more cradle arm(s) (e.g., a first cradle arm 534, a second cradle arm 536), a support base 538, a cradle 540, and a cable tie guide 550. The components 590 are illustrated in FIGs. 5B and 5C are cables.

The cradle arm(s) (e.g., a first cradle arm 534, a second cradle arm 536) are curved and define a high-capacity cradle 540 that is configured to retain its molded shape when loaded with components 590. The fixing 502 defines an opening gap (G) between a distal end of the cradle arm (e.g., distal end 535 of cradle arm 534 and/or distal end 537 of cradle arm 536) and a distal end of the body section 510. In aspects, a desired molded opening gap can be adjusted during cycle cooling time in an injection molding machine (e.g., no need to create additional tooling for varying gap size).

The fixing 502 may define at least one cut director 552. The cut director 552 is similar to the cut director 252 of the fixing 202 illustrated in FIGs. 2A-2D and described above, except as detailed below. Thus, the cut director 552 includes a channel 554 that is defined between a pair of parallel ridges (e.g., first ridge 556, second ridge 558), which extend from a surface of the fixing 502 (e.g., an outside surface of the stand-off member 532).

### Manufacture

One or more of the body section(s), the mounting section(s), the object support(s), or the breakable portion may be integrally formed of a suitable material(s) through one or more of an injection-molding process, an additive manufacturing process (e.g., a fused deposition modeling (FDM) process, a fused deposition modeling (FDM) process, a three-dimensional (3D) printing process), or another suitable process.

### Materials

The components of the fixing may be fabricated of any suitable material, including, but not limited to, metals, ceramics, polymers (e.g., polymeric material), and composites. A suitable polymeric material for a fixing may include one or more of a frangible polymeric material, a notch-sensitive polymeric material, polycarbonate, polyamide, polyamide 6.6, nylon 6, nylon, polypropylene, polyphenylene sulfide (PPS), polystyrene, acrylonitrile butadiene styrene (ABS), ABS with additional butadiene content, ABS 3D printing filament used in a fused deposition modeling (FDM) printer, ABS 3D printing filament used in a fused filament fabrication (FFF) printer, styrene butadiene rubber (SBR), SBR with additional rubber content, a stiff polymer resin blended with an elastomer, and the like, and polymers thereof.

### Alternative Language

Unless context dictates otherwise, use herein of the word "or" may be considered use of an "inclusive or," or a term that permits inclusion or application of one or more items that are linked by the word "or" (e.g., a phrase "A or B" may be interpreted as permitting just "A," as permitting just "B," or as permitting both "A" and "B"). Also, as used herein, a phrase referring to "at least one of" a list of items refers to any combination of those items, including single members. For instance, "at least one of a, b, or c" can cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c, or any other ordering of a, b, and c). Further, items represented in the accompanying figures and terms discussed herein may be indicative of one or more items or terms, and thus reference may be made interchangeably to single or plural forms of the items and terms in this written description.

### Conclusion

Although implementations for cable tie cradle mount fixings have been described in language specific to certain features and/or methods, the subject of the appended claims is not necessarily limited to the specific features or methods described. Rather, the specific features and methods are disclosed as example implementations for cable tie cradle mount fixings of the invention, which is solely limited by the wording of the appended claims.

## Claims

1. A cradle mount fixing (102, 202, 302) for attaching a component (190, 290, 390) to a workpiece (170, 270, 370), the cradle mount fixing (102, 202, 302) comprising:
a body section (110, 210 310), the body section (110, 210 310) having a body first end (311) extending to a body second end (317),
which defines a longitudinal axis, the body section (110, 210 310) including a cable tie guide (150, 250, 350) configured for receiving a cable tie (160, 260, 360), the cable tie guide (150, 250, 350) extending along the body section (110, 210 310) longitudinal axis, the cable tie guide (150, 250, 350) further comprising a pass-through (218, 318) defined in the cradle mount fixing (102, 202, 302) adjacent to the body second end;
a mounting section (120, 220, 320) connected to the body section (110, 210 310), the mounting section (120, 220, 320) comprising:
a connector (122, 222, 322) configured for attachment to the workpiece (170, 270, 370); and
an object support (130, 230, 330) extending from the body section (110, 210 310), the object support (130, 230, 330) and body section (110, 210 310) defining a cradle (240, 340) therebetween, the object support (130, 230, 330) including:
a stand-off member (132, 232, 332) having a member first end (237, 337) opposite a member second end (238, 338), the stand-off member (132, 232, 332) extending from the body section (110, 210 310) at the member first end (237, 337);
a cradle arm, the cradle arm having a proximal end (241, 246, 341, 351) extending to a distal end (244, 245, 344, 345), the proximal end (241, 246, 341, 351) of the cradle arm attaching to the member second end (238, 338), the distal end (244, 245, 344, 345) of the cradle arm comprising a bundle retainer (243, 343), the bundle retainer (243, 343) configured for retaining the component (190, 290, 390) in the cradle (240, 340),
**characterized in that**
the cradle arm is comprising:
a first cradle arm (234, 334); and
a second cradle arm (235, 335), the second cradle arm (235, 335) spaced apart from the first cradle arm (234, 334); and
a cable tie slot (231, 331) defined between the first cradle arm (234, 334) and the second cradle arm (235, 335), the cable tie slot (231, 331) configured to receive the cable tie (160, 260, 360) received through the cable tie guide (150, 250, 350) therein.

2. The cradle mount fixing (102, 202, 302) of claim 1,
wherein the bundle retainer (243, 343) extends in an inward direction towards the body section (110, 210 310), and
wherein the bundle retainer (243, 343) further extends in a downward direction towards the stand-off member (132, 232, 332).

3. The cradle mount fixing (102, 202, 302) of any one of the preceding claims,
wherein the bundle retainer (243, 343) further comprises a flexible tab.

4. The cradle mount fixing (102, 202, 302) of any one of the preceding claims, wherein the cable tie guide (150, 250, 350) further comprises:
an open-ended trough.

5. The cradle mount fixing (102, 202, 302) of any one of the preceding claims, wherein the cable tie guide (150, 250, 350) extends from a guide first end to a guide second end, and
wherein at least one of the guide first end or the guide second end comprises a ramped portion configured for guiding an end of the cable tie (160, 260, 360) into the cable tie guide (150, 250, 350).

6. The cradle mount fixing (102, 202, 302) of any one of the preceding claims, wherein the object support (130, 230, 330) further comprises:
a support base configured for supporting the component (190, 290, 390).

7. The cradle mount fixing (102, 202, 302) of claim 6, wherein the support base is sloped away from the body section (110, 210 310) longitudinal axis.

8. The cradle mount fixing (102, 202, 302) of any one of the preceding claims, wherein the first cradle arm (234, 334) and the second cradle arm (235, 335) extend parallel to the body section (110, 210 310) longitudinal axis.

9. The cradle mount fixing (102, 202, 302) of any one of the preceding claims, further comprising a cut director configured to protect the component (190, 290, 390) from damage when a fixed cable tie is cut off the cradle mount fixing (102, 202, 302), the cut director comprising:
a first ridge extending from a surface of the fixing; and
a second ridge extending from the surface of the fixing, the first ridge and the second ridge defining a channel therebetween, the channel configured for receiving a cutting tool, wherein the cut director is configured to receive the cable tie (160, 260, 360) with the cable tie (160, 260, 360) spanning the channel.

10. A breakable cradle mount fixing (400) configured for supporting a component (490) comprising:
the cradle mount fixing (102, 202, 302) of any one of the preceding claims as a first fixing part (410) and a second fixing part (450), the second fixing part (450) comprising:
a body section (452), the body section (452) having a body first end extending to a body second end, the body section (452) including a cable tie guide (470) configured for receiving a cable tie, the cable tie guide (470) comprising a channel portion;
a mounting section (454) connected to the body section (452), the mounting section (454) comprising:
a connector (456) configured for attachment to a workpiece; and
an object support (458) extending from the body section (452), the object support (458) and the body section (452) defining a cradle (468) therebetween, the object support (458) including:
a stand-off member (460) having a member first end opposite a member second end, the stand-off member (460) extending from the body section (452) at the body first end; and
a cradle arm, the cradle arm having a proximal end extending to a distal end, the proximal end of the cradle arm attaching to the member second end, the distal end of the cradle arm comprising a bundle retainer, the bundle retainer configured for retaining the component (490) in the cradle (468); and
a breakable portion (480), the breakable portion (480) connecting the first fixing part (410) to the second fixing part (450), the breakable portion (480) configured to break readily at a defined snap point (482) along which the breakable portion (480) is configured to break under a predetermined loading condition.

11. The breakable cradle mount fixing (400) of claim 10, wherein the snap point further comprises:
at least one notch in the fixing; and
a strap passage extending through the first and second fixing parts at the notch.

12. The breakable cradle mount fixing (400) of any one of claims 10 to 11, wherein the first fixing part, the second fixing part, and the breakable portion comprise a polymeric material.

13. The breakable cradle mount fixing (400) of any one of claims 10 to 12,
wherein the bundle retainer extends in an inward direction towards the body section, and
wherein the bundle retainer further extends in a downward direction towards the stand-off member, in particular with the bundle retainer further comprising a flexible tab.

## Patentansprüche

1. Eine Halterungsbefestigung (102, 202, 302) zum Befestigen einer
Komponente (190, 290, 390) an einem Werkstück (170, 270, 370), wobei die Halterungsbefestigung (102, 202, 302) umfasst:
einen Körperabschnitt (110, 210, 310), wobei der Körperabschnitt (110, 210, 310) ein erstes Körperende (311) aufweist, das sich zu einem zweiten Körperende (317) erstreckt, welcher eine Längsachse definiert, wobei der Körperabschnitt (110, 210, 310) eine Kabelbinderführung (150, 250, 350) umfasst, die zur Aufnahme eines Kabelbinders (160, 260, 360) ausgebildet ist, wobei sich die Kabelbinderführung (150, 250, 350) entlang der Längsachse des Körperabschnitts (110, 210, 310) verläuft, wobei die Kabelbinderführung (150, 250, 350) ferner eine Durchführung (218, 318) umfasst, die in der Halterungsbefestigung (102, 202, 302) benachbart zum zweiten Körperende definiert ist;
einen mit dem Körperabschnitt (110, 210, 310) verbundenen Befestigungsabschnitt (120, 220, 320), wobei der Befestigungsabschnitt (120, 220, 320) umfasst:
ein Verbindungselement (122, 222, 322), das zur Befestigung am Werkstück (170, 270, 370) ausgelegt ist; und
eine Objektstütze (130, 230, 330), die sich vom Körperabschnitt (110, 210, 310) erstreckt, wobei die Objektstütze (130, 230, 330) und der Körperabschnitt (110, 210, 310) zwischen sich eine Halterung (240, 340) bilden, wobei die Objektstütze (130, 230, 330) umfasst:
ein Abstandshalterelement (132, 232, 332) mit einem ersten Ende (237, 337) des Elements, das einem zweiten Ende (238, 338) des Elements gegenüberliegt, wobei sich das Abstandshalterelement (132, 232, 332) vom Körperabschnitt (110, 210, 310) am ersten Ende (237, 337) des Elements erstreckt;
einen Haltearm, wobei der Haltearm ein proximales Ende (241, 246, 341, 351) aufweist, das sich zu einem distalen Ende (244, 245, 344, 345) erstreckt, wobei das proximale Ende (241, 246, 341, 351) des Haltearms am zweiten Ende (238, 338) des Elements befestigt ist, wobei das distale Ende (244, 245, 344, 345) des Haltearms eine Bündelhalterung (243, 343) umfasst, wobei die Bündelhalterung (243, 343) so ausgebildet ist, dass sie das Bauteil (190, 290, 390) in der Halterung (240, 340) hält,
**dadurch gekennzeichnet, dass**
der Haltearm umfasst:
einen ersten Haltearm (234, 334); und
einen zweiten Haltearm (235, 335), wobei der zweite Haltearm (235, 335) vom ersten Haltearm (234, 334) beabstandet ist; und
einen Kabelbinder-Schlitz (231, 331), der zwischen dem ersten Haltearm (234, 334) und dem zweiten Haltearm (235, 335) ausgebildet ist, wobei der Kabelbinder-Schlitz (231, 331) ausgebildet ist, den durch die Kabelbinderführung (150, 250, 350) hindurchgeführten Kabelbinder (160, 260, 360) aufzunehmender .

2. Die Halterungsbefestigung (102, 202, 302) nach Anspruch 1,
wobei sich die Bündelhalterung (243, 343) in einer nach innen gerichteten Richtung zum Körperabschnitt (110, 210, 310) erstreckt, und
wobei sich die Bündelhalterung (243, 343) ferner in einer Abwärtsrichtung zum Abstandshalterelement (132, 232, 332) erstreckt.

3. Die Halterungsbefestigung (102, 202, 302) nach einem der vorstehenden Ansprüche,
wobei der Bündelhalter (243, 343) ferner eine flexible Lasche umfasst.

4. Die Halterungsbefestigung (102, 202, 302) gemäß einem der vorstehenden Ansprüche, wobei die Kabelbinderführung (150, 250, 350) ferner umfasst:
eine an den Enden offene Rinne.

5. Die Halterungsbefestigung (102, 202, 302) nach einem der vorstehenden Ansprüche, wobei sich die Kabelbinderführung (150, 250, 350) von einem ersten Führungsende zu einem zweiten Führungsende erstreckt und
wobei zumindest entweder das erste Führungsende oder das zweite Führungsende einen schräg abfallenden Abschnitt aufweist, der dazu ausgelegt ist, ein Ende des Kabelbinders (160, 260, 360) in die Kabelbinderführung (150, 250, 350) zu führen.

6. Die Halterungsbefestigung (102, 202, 302) nach einem der vorstehenden Ansprüche, wobei die Objektstütze (130, 230, 330) ferner umfasst:
eine Stützbasis, die zum Abstützen der Komponente (190, 290, 390) ausgebildet ist.

7. Die Halterungsbefestigung (102, 202, 302) nach Anspruch 6, wobei die Stützbasis von der Längsachse des Körperabschnitts (110, 210, 310) weg geneigt ist.

8. Die Halterungsbefestigung (102, 202, 302) nach einem der vorstehenden Ansprüche, wobei sich der erste Haltearm (234, 334) und der zweite Haltearm (235, 335) parallel zur Längsachse des Körperabschnitts (110, 210, 310) erstrecken.

9. Die Halterungsbefestigung (102, 202, 302) nach einem der vorstehenden Ansprüche, die ferner eine Schneidführung umfasst, die so ausgebildet ist, dass sie die Komponente (190, 290, 390) vor Beschädigung schützt, wenn ein befestigter Kabelbinder von der Halterungsbefestigung (102, 202, 302) abgeschnitten wird, wobei die Schneidführung umfasst:
eine erste Rippe, die sich von einer Oberfläche der Befestigung erstreckt; und
eine zweite Rippe, die sich von der Oberfläche der Befestigung erstreckt, wobei die erste Rippe und die zweite Rippe zwischen sich einen Kanal bilden, der zur Aufnahme eines Schneidwerkzeugs ausgelegt ist, wobei die Schnittführung so ausgelegt ist, dass sie den Kabelbinder (160, 260, 360) aufnimmt, wobei der Kabelbinder (160, 260, 360) den Kanal überspannt.

10. Eine bruchbare Halterungsbefestigung (400), die zum Halten einer Komponente (490) ausgelegt ist, umfassend:
die Halterungsbefestigung (102, 202, 302) gemäß einem der vorstehenden Ansprüche als erstes Befestigungsteil (410) und ein zweites Befestigungsteil (450), wobei das zweite Befestigungsteil (450) umfasst:
einen Körperabschnitt (452), wobei der Körperabschnitt (452) ein erstes Körperende aufweist, das sich zu einem zweiten Körperende erstreckt, und der Körperabschnitt (452) eine Kabelbinderführung (470) umfasst, die zur Aufnahme eines Kabelbinders ausgelegt ist, wobei die Kabelbinderführung (470) einen Kanalabschnitt umfasst;
einen mit dem Körperabschnitt (452) verbundenen Befestigungsabschnitt (454), wobei der Befestigungsabschnitt (454) umfasst:
ein Verbindungselement (456), das zur Befestigung an einem Werkstück ausgelegt ist; und
eine Objektstütze (458), die sich vom Körperabschnitt (452) erstreckt, wobei die Objektstütze (458) und der Körperabschnitt (452) zwischen sich eine Halterung (468) bilden, wobei die Objektstütze (458) umfasst:
ein Abstandshalterelement (460) mit einem ersten Ende, das einem zweiten Ende des Elements gegenüberliegt, wobei sich das Abstandshalterelement (460) vom Körperabschnitt (452) am ersten Körperende erstreckt; und
einen Haltearm, wobei der Haltearm ein proximales Ende aufweist, das sich zu einem distalen Ende erstreckt, wobei das proximale Ende des Haltearms am zweiten Ende des Elements befestigt ist, wobei das distale Ende des Haltearms eine Bündelhalterung umfasst, wobei die Bündelhalterung so ausgebildet ist, dass sie die Komponente (490) in der Halterung (468) hält; und
einen Bruchabschnitt (480), wobei der Bruchabschnitt (480) das erste Befestigungsteil (410) mit dem zweiten Befestigungsteil (450) verbindet, wobei der Bruchabschnitt (480) so ausgebildet ist, dass er an einer definierten Sollbruchstelle (482) leicht bricht, entlang derer der Bruchabschnitt (480) so ausgebildet ist, dass er unter einer vorbestimmten Belastungsbedingung bricht.

11. Die bruchbare Halterungsbefestigung (400) nach Anspruch 10, wobei die Bruchstelle ferner umfasst:
mindestens eine Kerbe in der Befestigung; und
einen Riemendurchgang, der sich an der Kerbe durch das erste und das zweite Befestigungsteil erstreckt.

12. Die bruchbare Halterungsbefestigung (400) nach einem der Ansprüche 10 bis 11, wobei das erste Befestigungsteil, das zweite Befestigungsteil und der zerbrechbare Abschnitt aus einem Polymermaterial bestehen.

13. Die bruchbare Halterungsbefestigung (400) nach einem der Ansprüche 10 bis 12,
wobei sich die Bündelhalterung in Richtung des Körperabschnitts erstreckt und
wobei sich die Bündelhalterung ferner in einer Abwärtsrichtung zum Abstandshalterelement erstreckt, wobei die Bündelhalterung insbesondere ferner eine flexible Lasche umfasst.

## Revendications

1. Fixation de support en berceau (102, 202, 302) configurée pour fixer un composant (190, 290, 390) à une pièce à usiner (170, 270, 370), la fixation de support en berceau (102, 202, 302) comprenant:
une section de corps (110, 210, 310), ladite section de corps (110, 210, 310) comportant une première extrémité de corps (311) s'étendant jusqu'à une seconde extrémité de corps (317), qui définit un axe longitudinal, ladite section de corps (110, 210, 310) comprenant un guide-attache de câble (150, 250, 350) configuré pour recevoir une attache de câble (160, 260, 360), le guide-attache de câble (150, 250, 350) s'étendant le long de la section de corps (110, 210, 310), le guide-attache de câble (150, 250, 350) comprenant en outre un passage (218, 318) défini dans la fixation de support en berceau (102, 202, 302) à proximité de la seconde extrémité du corps ;
une section de montage (120, 220, 320) reliée à la section de corps (110, 210, 310), la section de montage (120, 220, 320) comprenant :
un connecteur (122, 222, 322) configuré pour être fixé à la pièce à usiner (170, 270, 370) ; et
un support d'objet (130, 230, 330) s'étendant à partir de la section de corps (110, 210, 310), le support d'objet (130, 230, 330) et la section de corps (110, 210, 310) définissant un berceau (240, 340) entre eux, le support d'objet (130, 230, 330) comprenant :
un élément d'écartement (132, 232, 332) comportant une première extrémité (237, 337) opposée à une seconde extrémité (238, 338), l'élément d'écartement (132, 232, 332) s'étendant depuis la section de corps (110, 210, 310) au niveau de la première extrémité (237, 337) de l'élément ;
un bras de berceau, le bras de berceau comportant une extrémité proximale (241, 246, 341, 351) s'étendant jusqu'à une extrémité distale (244, 245, 344, 345), l'extrémité proximale (241, 246, 341, 351) du bras de berceau se fixant à la deuxième extrémité de l'élément (238, 338), l'extrémité distale (244, 245, 344, 345) du bras de berceau comprenant un dispositif de retenue de faisceau (243, 343), le dispositif de retenue de faisceau (243, 343) étant configuré pour retenir le composant (190, 290, 390) dans le berceau (240, 340),
**caractérisé en ce que**
le bras de berceau comprend :
un premier bras de berceau (234, 334) ; et
un deuxième bras de berceau (235, 335), le deuxième bras de berceau (235, 335) étant espacé du premier bras de berceau (234, 334); et
une fente pour attache de câble (231, 331) définie entre le premier bras de berceau (234, 334) et le deuxième bras de berceau (235, 335), la fente pour attache de câble (231, 331) étant configurée pour recevoir l'attache de câble (160, 260, 360) acheminé à travers le guide-attache de câble (150, 250, 350).

2. La fixation de support en berceau (102, 202, 302) selon la revendication 1,
dans lequel le dispositif de retenue de faisceau (243, 343) s'étend en direction de l'intérieur vers la section de corps (110, 210, 310), et
dans lequel le dispositif de retenue de faisceau (243, 343) s'étend en outre en direction du vers l'élément d'écartement (132, 232, 332).

3. La fixation de support en berceau (102, 202, 302) selon l'une quelconque des revendications précédentes,
dans lequel le dispositif de retenue de faisceau (243, 343) comprend en outre une languette flexible.

4. La fixation de support en berceau (102, 202, 302) selon l'une quelconque des revendications précédentes, dans laquelle le guide-attache de câble (150, 250, 350) comprend en outre:
une goulotte à extrémités ouvertes.

5. La fixation de support en berceau (102, 202, 302) selon l'une quelconque des revendications précédentes, dans lequel le guide-attache de câble (150, 250, 350) s'étend d'une première extrémité du guide à une seconde extrémité du guide, et
dans lequel au moins l'une parmi la première extrémité du guide et la seconde extrémité du guide comprend une partie en pente configurée pour guider une extrémité de l'attache de câble (160, 260, 360) dans le guide-attache de câble (150, 250, 350).

6. La fixation de support en berceau (102, 202, 302) selon l'une quelconque des revendications précédentes, dans lequel le support d'objet (130, 230, 330) comprend en outre:
une base de support configurée pour supporter le composant (190, 290, 390).

7. La fixation de support en berceau (102, 202, 302) selon la revendication 6, dans lequel la base de support est inclinée à l'opposé de l'axe longitudinal de la section de corps (110, 210, 310).

8. La fixation de support en berceau (102, 202, 302) selon l'une quelconque des revendications précédentes, dans lequel le premier bras de berceau (234, 334) et le deuxième bras de berceau (235, 335) s'étendent parallèlement à l'axe longitudinal de la section de corps (110, 210, 310).

9. La fixation de support en berceau (102, 202, 302) selon l'une quelconque des revendications précédentes, comprenant en outre un guide de coupe configuré pour protéger le composant (190, 290, 390) contre tout dommage lorsqu'un attache de câble fixé est coupé de la fixation de support en berceau (102, 202, 302), le guide de coupe comprenant:
une première arête s'étendant depuis une surface de la fixation ; et
une deuxième arête s'étendant à partir de la surface de la fixation, la première arête et la deuxième arête définissant entre elles un canal, ledit canal étant agencé pour recevoir un outil de coupe, dans lequel le guide de coupe est agencé pour recevoir l' attache de câble (160, 260, 360), l' attache de câble (160, 260, 360) enjambant le canal.

10. Fixation de support en berceau cassable (400) configurée pour supporter un composant (490), comprenant:
la fixation de support en berceau (102, 202, 302) selon l'une quelconque des revendications précédentes en tant que première partie de fixation (410) et une deuxième partie de fixation (450), la deuxième partie de fixation (450) comprenant:
une section de corps (452), la section de corps (452) présentant une première extrémité de corps s'étendant jusqu'à une seconde extrémité de corps, la section de corps (452) comprenant un guide-attache de câble (470) configuré pour recevoir une attache de câble, le guide-attache de câble (470) comprenant une partie formant canal ;
une section de montage (454) reliée à la section de corps (452), la section de montage (454) comprenant :
un connecteur (456) configuré pour être fixé à une pièce à usiner; et
un support d'objet (458) s'étendant à partir de la section de corps (452), le support d'objet (458) et la section de corps (452) définissant entre eux un berceau (468), le support d'objet (458) comprenant :
un élément d'écartement (460) comportant une première extrémité opposée à une seconde extrémité, l'élément d'écartement (460) s'étendant à partir de la section de corps (452) au niveau de la première extrémité du corps ; et
un bras de berceau, le bras de berceau comportant une extrémité proximale s'étendant jusqu'à une extrémité distale, l'extrémité proximale du bras de berceau se fixant à la deuxième extrémité de l'élément, l'extrémité distale du bras de support comprenant un dispositif de retenue de faisceau, le dispositif de retenue de faisceau étant configuré pour retenir le composant (490) dans le berceau (468); et
une partie cassable (480), la partie cassable (480) reliant la première partie de fixation (410) à la deuxième partie de fixation (450), la partie cassable (480) étant configurée pour se rompre facilement au niveau d'un point de rupture défini (482) le long duquel la partie cassable (480) est configurée pour se rompre sous une condition de charge prédéterminée.

11. La fixation de support en berceau cassable (400) selon la revendication 10, dans laquelle le point de rupture comprend en outre:
au moins une encoche dans la fixation ; et
un passage pour sangle s'étendant à travers les première et deuxième parties de fixation au niveau de l'encoche.

12. La fixation de support en berceau cassable (400) selon l'une quelconque des revendications 10 à 11, dans laquelle la première partie de fixation, la deuxième partie de fixation et la partie cassable sont constituées d'un matériau polymère.

13. La fixation de support en berceau cassable (400) selon l'une quelconque des revendications 10 à 12,
dans laquelle le dispositif de retenue de faisceau s'étend en direction de l'intérieur vers la section de corps, et
dans lequel le dispositif de retenue de faisceau s'étend en outre en direction du bas vers de l'élément d'écartement, le dispositif de retenue de faisceau comprenant en outre une languette flexible.
